# EUROPÄISCHE PATENTSCHRIFT

(11) **EP 2 364 936 B1**
(45) Veröffentlichungstag und Bekanntmachung des Hinweises auf die Patenterteilung: **15.04.2015**
(21) Anmeldenummer: 11155819.3
(22) Anmeldetag: 24.02.2011
(51) Int. Cl.: B65G 47/71

(54) **Vorrichtung und Verfahren zum Verteilen von Artikeln innerhalb eines Artikelstroms**
Device and method for distributing items within a flow of items
Dispositif et procédé de répartition d'articles à l'intérieur d'un flux d'articles

(30) Priorität: 09.03.2010 DE 102010015888
(43) Veröffentlichungstag der Anmeldung: 14.09.2011
(73) Patentinhaber: Krones AG, 93073 Neutraubling (DE)
(72) Erfinder: Heigl, Stefan, 94345, Aholfing (DE); Hüttner, Johann, 84066, Mallersdorf (DE); Mühlstein, Peter, 93096, Köfering (DE); Seger, Martin, 92318, Neumarkt i. d. Opf. (DE)
(74) Vertreter: Reichert & Lindner Partnerschaft Patentanwälte

(56) Entgegenhaltungen:
- EP-A1- 1 439 140
- DE-A1- 2 727 277
- FR-A1- 2 639 621
- US-A- 2 371 419
- US-A- 2 678 124
- US-A- 3 145 825
- US-A- 5 186 306

## Beschreibung

Die vorliegende Erfindung betrifft eine Vorrichtung zum Verteilen von Artikeln innerhalb eines Artikelstroms in einer Transportrichtung.

Die Vorrichtung besitzt ein einlaufendes Transportband, das in Transportrichtung die Artikel innerhalb eines Artikelstroms anliefert. Das Transportband besitzt mehrere Transportspuren, mit denen die Artikel angeliefert werden. Ferner ist ein erstes auslaufendes Transportband und ein zweites auslaufendes Transportband vorgesehen, die jeweils mehrere Transportspuren aufweisen. Das einlaufende Transportband und das erste und zweite auslaufende Transportband sind derart in Transportrichtung zueinander angeordnet, dass ein Überlappbereich ausgebildet ist.

Ferner betrifft die Erfindung ein Verfahren zum Verteilen von Artikeln innerhalb eines Artikelstroms. Die Artikel werden in Transportrichtung über ein einlaufendes Transportband angeliefert. Anschließend werden die Artikel auf ein erstes auslaufendes und ein zweites auslaufendes Transportband verteilt.

Die europäische Patentschrift EP 1 424 297 B1 offenbart eine Vorrichtung zum Auseinanderführen eines Behälterstroms. Die Vorrichtung zur Auseinanderführung und Aufteilung von Behälterströmen umfasst mindestens einen Behältereinlauf, der mindestens zwei Einlaufbänder besitzt. Im Behälterstrom ist ein Führungselement angeordnet. Die Transportbänder werden im Bereich des Führungselements so zugeführt, dass sie den Behälterstrom auseinanderführen und aufteilen. Da sich bei der Auseinanderführung der Transportbänder eine Lücke zwischen den Einlaufbändern bildet, ist diese durch mindestens ein Gleitblech abgedeckt. Innerhalb der Auseinanderführung ist eine Umlenkstation für die Behälter vorgesehen.

Die europäische Patentschrift EP 1 807 329 B1 offenbart eine Vorrichtung zum Puffern von Gegenständen. Die Vorrichtung zum Puffern von Gegenständen besitzt zwei parallele, gegenläufig antreibbare Förderer. Um die Puffereinrichtung variabel gestalten zu können, ist mittels mindestens einer Linearführung entlang der Förderer eine verfahrbare Transfereinrichtung angeordnet, die zum Überführen der Gegenstände zwischen den beiden parallel angeordneten Förderern dient. Diese Linearführung ist mit einem Abstand über den Förderern angeordnet. Die Linearführung ist etwa mittig über den einen Förderer und die andere Linearführung ist etwa mittig über den anderen Förderer angeordnet.

Die europäische Patentanmeldung EP 2 110 346 A1 offenbart eine Anordnung und ein Verfahren zum Transport und zur Synchronverteilung von Behältnissen. Die Behältnisse werden auf einer Transportvorrichtung stetig bereitgestellt und auf zwei weitere Transportvorrichtungen aufgeteilt. Die Behältnisse werden auf der ersten Transportvorrichtung mittels zweier Klappen zentriert, wobei die Bewegung der Klappen mechanisch gekoppelt ist.

Die europäische Patentschrift EP 0 585 685 B1 offenbart eine Vorrichtung zum Überleiten eines in einer Reihe einspurig zulaufenden Gefäßstromes auf mehrere abführende Förderspuren. Das Überführen des Gefäßstromes geschieht dabei mit Hilfe einer Schaltweiche, die als Gleitfläche dient und deren stromaufwärtiges zum einspurig zulaufenden Gefäßstrom weisendes Ende im Wesentlichen quer zur Förderrichtung verstellbar ist. Die Schaltweiche ist dabei zumindest abschnittsweise biege-elastisch ausgebildet. Ihr stromabwärts weisendes Ende ist quer zur Förderrichtung verrückbar gehalten oder geführt.

Die U.S.-amerikanische Patentschrift US 2,371,419 A offenbart eine gattungsgemäße Vorrichtung zum Verteilen von Artikeln innerhalb eines Artikelstroms in einer Transportrichtung. Die Vorrichtung weist ein einlaufendes Transportband und erstes auslaufendes Transportband sowie ein zweites auslaufendes Transportband auf. Ein Verteilelement, das mitunter zwei schwenkbare Arme aufweist, verteilt die Artikel von dem einlaufenden Transportband auf das erste auslaufende Transportband oder das zweite auslaufende Transportband, je nachdem in welche Richtung die schwenkbaren Arme geschwenkt sind.

Die europäische Patentanmeldung EP 0 619 251 A1 offenbart eine Vorrichtung zum Behältertransport, bei der die auf einer Transportspur einlaufenden Behälter auf mehrere Auslaufspuren gesteuert verteilt werden können. Um die Behälter gezielt auf die auslaufenden Transportspuren zu verteilen, werden die Behälter bereits am einlaufenden Transportband in eine entsprechende Anzahl von Behältern aufgereiht, die letztlich in die abführenden Transportspuren eingeführt werden. Ebenso ist es mit der beschriebenen Vorrichtung möglich, einzelne auslaufende Transportspuren mittels Weichen umzuleiten.

Aufgabe der Erfindung ist, eine Vorrichtung zu schaffen, mit der es möglich ist, auf einfache und sehr variable Weise einen einlaufenden Behälterstrom auf zwei auslaufende Behälterströme aufzuteilen. Ferner soll die Aufteilung des Behälterstroms möglichst automatisch durchführbar sein und auf die unterschiedlichen Behälterformen und Größen angepasst werden können.

Die obige Aufgabe wird durch eine Vorrichtung gelöst, die die Merkmale des Anspruchs 1 umfasst.

Eine weitere Aufgabe der Erfindung ist, ein Verfahren zu schaffen, mit dem ein Behälterstrom auf möglichst einfache und automatische Art und Weise in zwei auslaufende Behälterströme aufgeteilt werden kann. Hinzu kommt, dass das Verfahren möglichst automatisch auch auf auftretende Störungen reagieren soll.

Die obige Aufgabe wird durch ein Verfahren gelöst, das die Merkmale des Anspruchs 11 umfasst.

Wie bei dem Stand der Technik beschrieben, wird die Verteilung von Behältern von einem mehrbahnig auf zwei mehrbahnige Transportstrecken im Wesentlichen manuell oder motorisch/pneumatisch betriebenen Klappensystem ausgeführt. Beim Einsatz von Klappen kann nur eine Zieltransportstrecke beliefert werden. Die Klappen können zwar entfernt werden, jedoch verteilt in diesem Fall das dahinter liegende starre dreiecksförmige Führungsgeländer die ankommenden Behälter in einem festen Verhältnis. Dieses Verhältnis ist meistens so ausgestattet, dass 50% der Behälter auf die eine auslaufende Transportstrecke und 50% der Behälter auf die andere auslaufende Transportstrecke aufgeteilt werden. Weiterhin muss bei einem Schaltvorgang der Klappe die zuführende Transportstrecke frei von Behältern sein.

Bei der erfindungsgemäßen Ausführung wird ein dreieckförmiges und motorisch betreibbares Verteilelement eingesetzt. Das Verteilelement ist dabei quer zu einer Transportrichtung der einlaufenden Transportstrecke verschiebbar angeordnet. Das Verteilelement ist erfindungsgemäß an einem Portal aufgehängt. Durch das Antriebssystem kann das Verteilelement quer über die Transportstrecke stufenlos verfahren werden. Dadurch ist es möglich, dass die beiden auslaufenden Transportstrecken mit beliebigen Teilmengen der Behälterreihen der zulaufenden Transportstrecke beliefert werden können. Es muss jedoch darauf geachtet werden, dass möglichst nur ganzzahlige Behältermengen verteilt werden. Darüber hinaus kann auch während des laufenden Betriebes geschaltet werden, sofern die auf den auslaufenden Transportstrecken installierten Sicherheitslichtschranken keine Staumeldungen liefern.

Weiterhin ist es möglich, dass bei Meldung eines Rückstaus eines auslaufenden Transportbandes der Behälterstrom dynamisch auch während des Betriebs komplett auf die andere auslaufende Förderstrecke umgeleitet werden kann. Ein Rückstau kann z. B. dann auftreten, wenn eine der Vorrichtung nach geschaltete Verarbeitungsmaschine eine Fehlermeldung anzeigt oder meldet und somit nicht mehr für die Bearbeitung der ihr zugeführten Behälter zur Verfügung steht. Das erfindungsgemäße Verteilelement kann auch als zusätzliches Schwellglied in die Rückstauregelung integriert werden, um Rückstauungen bereits im Vorfeld durch geeignete Variation der Behälterverteilung auf die beiden auslaufenden Transportstrecken auszuschließen.

Die erfindungsgemäße Vorrichtung zum Verteilen von Artikeln innerhalb eines Artikelstroms, bei dem die Artikel in einer Transportrichtung auf einem einlaufenden Transportband angeliefert werden, umfasst ein Verteilelement. Das einlaufende Transportband kann dabei mehrere Transportspuren umfassen. Dem einlaufenden Transportband sind ein erstes auslaufendes Transportband und ein zweites auslaufendes Transportband zugeordnet. Jedes der auslaufenden Transportbänder weist mehrere Transportspuren auf. Das einlaufende Transportband und das erste und zweite auslaufende Transportband sind derart in Transportrichtung zueinander angeordnet, dass ein Überlappbereich zwischen den Transportbändern ausgebildet ist. Ein Verteilelement ist dabei im Wesentlichen quer zur Transportrichtung verschieblich angeordnet, so dass der in Transportrichtung ankommende Artikelstrom auf das erste auslaufende Transportband und/oder das zweite auslaufende Transportband variabel und zeitlich veränderbar verteilbar ist.

Erfindunggemäß ist das Verteilelement aus einem ersten Führungsgeländer und einem zweiten Führungsgeländer aufgebaut. Beide Führungsgeländer sind unter einem spitzen Winkel zueinander angeordnet. Der spitze Winkel bildet somit eine Spitze aus, die der Transportrichtung entgegengerichtet ist. Die mit dem einlaufenden Transportband zugeführten Behälter laufen somit auf die Spitze des Verteilelements zu und werden durch das erste und zweite Führungsgeländer entsprechend auf das erste auslaufende Transportband und das zweite auslaufende Transportband geleitet. Wie der prozentuale Anteil der Behälter ist, der auf das erste Transportband und auf das zweite Transportband geleitet wird, richtet sich im Wesentlichen nach der Stellung des Verteilelements im einlaufenden Artikelstrom. Diese Stellung kann diskret jede Position zwischen den Endschaltern sein und ist nur abhängig vom gewählten Antriebsmittel und einer möglichen dazugehörigen Getriebeübersetzung.

Das erste Führungsgeländer und das zweite Führungsgeländer des Verteilelements sind über eine Basis miteinander verbunden. Die Basis stützt sich dabei an einem in Transportrichtung nach geordneten Führungselement, das beispielsweise gelagerte Rollen umfasst ab. Quer zur Transportrichtung ist somit das Verteilelement am Führungselement reibungsreduzierend unterstützt. Die Basis des Verteilelements und des Führungselements wirken dabei über mehrere Rollen quer zur Transportrichtung zusammen, um somit die reibungsreduzierende Unterstützung bereitzustellen.

Das Verteilelement ist mit einer Plattform verbunden. Die Plattform ist an einem Portal aufgehängt. Das Portal erstreckt sich quer über den Überlappungsbereich des einlaufenden Transportbandes und des ersten und zweiten auslaufenden Transportbandes.

Dem Portal ist ein individuell ansteuerbarer Motor zugeordnet. Über ein Antriebsband wirkt die Drehbewegung des Motors auf die am Portal linear geführte Plattform. Ferner sind am Portal zwei Endschalter angebracht, über die ein Verfahrbereich des Verteilelements quer zur Transportrichtung beschränkbar ist.

Die Breite des einlaufenden Transportbandes und die Breite der auslaufenden Transportbänder sind in erfindungsgemäßer Weise aufeinander abgestimmt. Die Summe aus der ersten Breite des ersten auslaufenden Transportbandes und der Breite des zweiten auslaufenden Transportbandes ist dabei größer, als die Breite des einlaufenden Transportbandes. Es ist für die Erfindung besonders vorteilhaft, wenn die Breite des ersten auslaufenden Transportbandes und die Breite des zweiten auslaufenden Transportbandes, sowie die Breite des einlaufenden Transportbandes jeweils gleich sind.

Die erfindungsgemäße Vorrichtung ist ferner mit einer Maschinensteuerung versehen. In Abhängigkeit von den mit der erfindungsgemäßen Vorrichtung verarbeiteten Artikeln wird über die Maschinensteuerung eine prozentuale Verteilung der Artikel auf das erste und zweite auslaufende Transportband erzielt. Dies erreicht man dadurch, dass mit dem Motor das Verteilelement über das Portal quer zur Transportrichtung geschoben wird. Dabei wird durch die Maschinensteuerung die durch das erste und zweite Führungsgeländer gebildete Spitze im Wesentlichen auf eine Linie gerichtet, die sich aus der Berührung der jeweiligen Standkreisdurchmesser zweier Artikel ergibt. Durch diese Positionierung des Verteilelements mittels der Maschinensteuerung wird erreicht, dass sämtliche einlaufenden Artikel auf das erste auslaufende Transportband und das zweite auslaufende Transportband verteilt werden. Ein möglicher Rückstau ist somit vermieden, da die Artikel nicht mit ihrem vollen Durchmesser auf die Spitze des Verteilelements treffen. Alle Artikel werden somit durch das Verteilelement auf das erste auslaufende Transportband, bzw. auf das zweite auslaufende Transportband geleitet.

Das erfindungsgemäße Verfahren ist dazu geeignet, einen einlaufenden Artikelstrom über ein Verteilelement auf ein erstes auslaufendes Transportband und ein zweites auslaufendes Transportband zu verteilen. Das Verteilelement ist für eine variable Verteilung der Artikel, die über ein einlaufendes Transportband angeliefert werden, quer zur Transportrichtung der einlaufenden Artikel verfahrbar. Durch die beliebige Positionierung des Verteilelements in dem einlaufenden Artikelstrom ist es somit möglich, die Artikel gemäß einem vordefinierten prozentualen Verhältnis auf das erste und zweite auslaufende Transportband zu verteilen.

Mittels des Verteilelements werden die vom einlaufenden Transportband angelieferten Artikel in einen ersten Transportbereich des ersten auslaufenden Transportbandes und in einen zweiten Transportbereich des zweiten auslaufenden Transportbandes überführt. In Abhängigkeit von der Stellung des Verteilelements werden in einem Überlappbereich des einlaufenden Transportbandes und der beiden auslaufenden Transportbänder im Wesentlichen neben dem Verteilelement und in Transportrichtung hinter dem Verteilelement artikelfreie Bereiche ausgebildet.

Um die Artikel besonders sanft auf das erste Transportband und das zweite Transportband zu verteilen, besteht das Verteilelement aus einem ersten und zweiten Führungsgeländer, die beide unter einem spitzen Winkel miteinander verbunden sind und somit eine Spitze ausbilden. Die Spitze ist dabei der Transportrichtung der Artikel entgegengerichtet, die über das erste Transportband angeliefert werden.

Dem ersten auslaufenden Transportband ist eine Verarbeitungseinheit für die Artikel nachgeschaltet. Ebenso ist dem zweiten auslaufenden Transportband eine Verarbeitungseinheit für die Artikel nachgeschaltet. Die Maschinensteuerung kann nun von der ersten und zweiten Verarbeitungseinheit entsprechende Signale empfangen, die auf eine mögliche Störung, bzw. auf eine mögliche Kapazitätsgrenze der nachgeschalteten Verarbeitungseinheit hinweisen. Ferner sind mehrere Sensoren vorgesehen, die das einlaufende Transportband, das erste auslaufende Transportband und das zweite auslaufende Transportband hinsichtlich der Transportsituation der Artikel auf den einzelnen Bändern überwachen. Wird von den Sensoren anhand der Transportsituation z. B. ein Stau festgestellt, werden von den Sensoren entsprechende Signale an die Maschinensteuerung gesendet.

Ebenso werden von den mehreren Sensoren die artikelfreien Bereiche dahingehend bewacht, ob sich in den ansonsten artikelfreien Bereichen Artikel befinden. Das Vorhandensein von Artikeln in den artikelfreien Bereichen deutet darauf hin, dass innerhalb der Vorrichtung auf den einzelnen Transportbändern ein Stau auftritt oder dass die nach geschalteten Verarbeitungseinheiten nicht mit dem angelieferten Artikelstrom auf dem ersten oder zweiten auslaufenden Transportband Schritt halten können. Aufgrund des von den Sensoren an die Maschinensteuerung übermittelten Warnsignals, greift somit die Maschinensteuerung in die Vorrichtung ein und sorgt für eine geeignete Verstellung des Verteilelements. Durch die geeignete Stellung des Verteilelements kann somit der Artikelstrom in geeigneter Weise auf das andere, nicht mit einem Rückstau belastete auslaufende Transportband umgeleitet werden, so dass ein weiterer fortschreitender Betrieb der Vorrichtung möglich ist. Ebenso kann die Maschinensteuerung aufgrund des Warnsignals in eine Geschwindigkeitsteuerung des einlaufenden Transportbandes und/oder der beiden auslaufenden Transportbänder eingreifen, so dass letztlich der Grund für die Absendung des Warnsignals aufgehoben werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
- Figur 1: zeigt eine perspektivische Ansicht der erfindungsgemäßen Vorrichtung, die aus einem einlaufenden Transportband, einem ersten auslaufenden Transportband und einem zweiten auslaufenden Transportband besteht.
- Figur 2: zeigt eine Frontansicht der erfindungsgemäßen Vorrichtung zum Verteilen von Artikeln innerhalb eines Artikelstroms.
- Figur 3: zeigt eine Seitenansicht der erfindungsgemäßen Vorrichtung zum Verteilen von Artikeln innerhalb eines Artikelstroms.
- Figur 4: zeigt eine Draufsicht auf die erfindungsgemäße Vorrichtung zum Verteilen von Artikeln, wobei das Verteilelement mittig im einlaufenden Transportband positioniert ist.
- Figur 5: zeigt eine Draufsicht auf die Vorrichtung zum Verteilen von Artikeln, wobei das Verteilelement nach links in Bezug auf das einlaufende Transportband verschoben ist.
- Figur 6: zeigt eine Draufsicht auf die Vorrichtung zum Verteilen von Artikeln, wobei das Verteilelement am linken äußeren Rand der Vorrichtung anliegt.
- Figur 7: zeigt eine vergrößerte Ansicht des in Figur 6 mit dem gestrichelten Rechteck gekennzeichneten Bereichs.
- Figur 8: zeigt eine Draufsicht auf die Vorrichtung zum Verteilen von Artikeln, wobei eine Vielzahl von Sensoren angeordnet ist, die zum Überwachen des Artikelstroms innerhalb der Vorrichtung dienen.
- Figur 9: zeigt eine vergrößerte Ansicht des Verteilelements, welches über den Transportbändern der Vorrichtung beweglich positioniert ist.
- Figur 10: zeigt eine vergrößerte Darstellung des Bereichs des Verteilelements, das sich zur Stabilisierung an einem Führungselement abstützt.
- Figur 11: zeigt eine vergrößerte Darstellung der auf dem einlaufenden Transportband angeordneten Artikel, welche auf die Spitze des Verteilelements treffen.
- Figur 12: zeigt eine vergrößerte Darstellung des Zusammenwirkens der auf dem einlaufenden Transportband herantransportierten Artikel mit dem Verteilelement und deren Aufteilung auf die auslaufenden Transportbänder.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

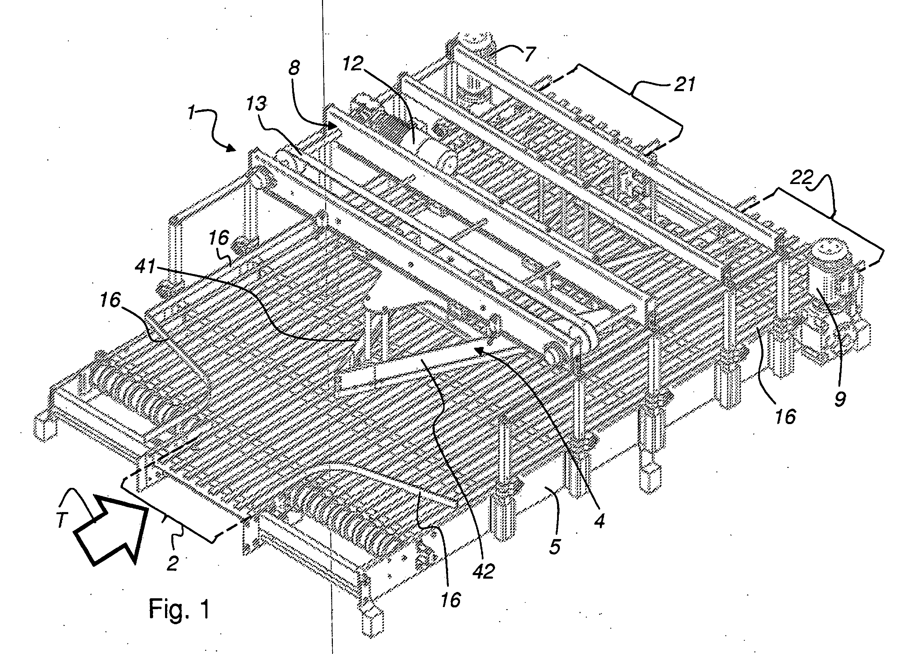

**Figur 1** zeigt eine perspektivische Ansicht der erfindungsgemäßen Vorrichtung 1. Die Vorrichtung 1 ist aus einem einlaufenden Transportband 2 und einem ersten auslaufenden Transportband 21 und einem zweiten auslaufenden Transportband 22 aufgebaut. Die Transportbänder 2, 21 und 22 sind in einen Rahmen 5 eingesetzt. Dem einlaufenden Transportband 2 ist ein erster Motor 7 und ein zweiter Motor 9 zugeordnet. Es ist ebenso vorstellbar, dass nur ein Motor zum Antrieb des einlaufenden Transportbandes 2 verbaut ist. Wird nur ein Motor verbaut dient dies zum Einsparen von Kosten für die Vorrichtung 1 zum transportieren von Artikeln. Die Artikel (hier nicht dargestellt) werden in Transportrichtung T auf dem einlaufenden Transportband 2 angeliefert. Quer zur Transportrichtung T ist ein Verteilelement 4 beweglich angeordnet. Das Verteilelement 4 ist an einem Portal 8 angelenkt, dass sich quer über die durch das einlaufende Transportband, das auslaufende erste Transportband 21 und das auslaufende zweite Transportband 22 gebildeten Transportfläche erstreckt. Die durch das einlaufende Transportband 2, das erste auslaufende Transportband 21 und das zweite auslaufende Transportband 22 gebildeten Transportfläche ist jeweils seitlich durch ein entsprechend geformtes Geländer 16 begrenzt. Das Verteilelement 4 ist aus einem ersten Führungsgeländer 41 und einem zweiten Führungsgeländer 42 gebildet. Mit dem ersten Führungsgeländer 41 und dem zweiten Führungsgeländer 42 des Verteilelements 4 werden die auf dem einlaufenden Transportband 2 in Transportrichtung T angelieferten Artikel in entsprechender Weise auf das erste auslaufende Transportband 21 und das zweite auslaufende Transportband 22 aufgeteilt. Die prozentuale Aufteilung der Artikel auf das erste auslaufende Transportband 21 und das zweite auslaufende Transportband 22 richtet sich nach der Stellung des Verteilelement 4 und kann somit in Abhängigkeit von den gewünschten Anforderungen durch die Bewegung des Verteilelements 4 quer zur Transportrichtung T eingestellt werden.

Für die Bewegung des Verteilelements 4 quer zur Transportrichtung T ist am Portal 8 ein Motor 12 angelenkt. Der Motor 12 wirkt dabei auf ein Antriebsband 13, welches die Drehbewegung des Motors 12 in eine lineare Bewegung des Verteilelements 4 quer zur Transportrichtung T umsetzt.

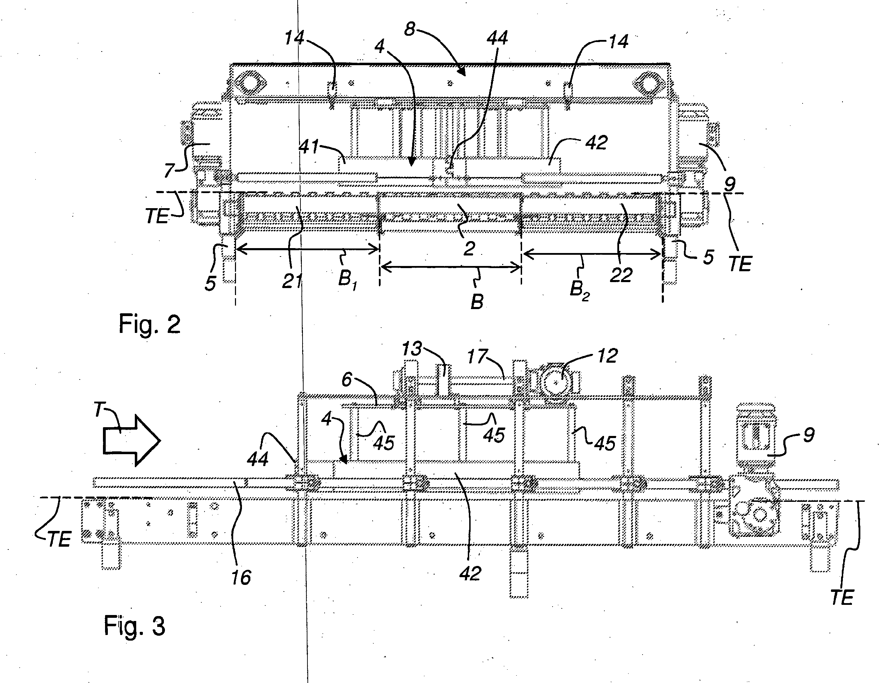

**Figur 2** zeigt die Frontansicht der erfindungsgemäßen Vorrichtung 1. Die Transportrichtung T ist hier in die Zeichenebene hineingerichtet. Das einlaufende Transportband 2 ist zwischen dem ersten auslaufenden Transportband 21 und dem zweiten auslaufenden Transportband 22 angeordnet. Das erste auslaufende Transportband besitzt eine Breite B1. Das zweite auslaufende Transportband 22 besitzt eine Breite B2. Das einlaufende Transportband 2 besitzt eine Breite B. Die Summe aus der Breite B1 des ersten Transportbandes 21 und der Breite B2 des zweiten auslaufenden Transportbandes 22 ist dabei größer als die Breite B des einlaufenden Transportbandes 2. In einer bevorzugten Ausgestaltung der Erfindung ist die Summe der Breiten B1 und B2 des ersten auslaufenden Transportbandes 21 und des zweiten auslaufenden Transportbandes 22 doppelt so groß, wie die Breite B des einlaufenden Transportbandes 2. Wie bereits in der Beschreibung zu Figur 1 erwähnt, sind das erste auslaufende Transportband 21, das einlaufende Transportband 2 und das zweite auslaufende Transportband 22 in einem Rahmen 5 angeordnet. Über der durch das erste auslaufende Transportband 21, dem einlaufenden Transportband 2 und dem zweiten auslaufenden Transportband 22 gebildeten Transportebene TE ist das Verteilelement 4 quer zur Transportrichtung T verschieblich angeordnet. Das Verteilelement 4 besteht aus dem ersten Führungsgeländer 41 und dem zweiten Führungsgeländer 42, die unter Ausbildung einer Spitze 44 miteinander verbunden sind. Die Spitze 44 weist dabei der Transportrichtung T entgegen. Die Spitze 44 kann mit kleinen Rollen besetzt sein, um das Umlenken der Artikel auf das erste auslaufenden Transportband 21 und das zweite auslaufende Transportband 22 zu erleichtern. Das Verteilelement 4 ist an einem Portal 8 befestigt, an dem es quer zur Transportrichtung T verschoben werden kann. Das Portal 8 erstreckt sich über die gesamte durch die Transportbänder 21, 2 und 22 gebildete Transportebene TE. Seitlich am Rahmen 5 sind der erste Motor 7 und der zweite Motor 9 für den Antrieb des einlaufenden Transportbandes 2 angeordnet. Am Portal 8 sind ferner Endschalter 14 angebracht, die den Bewegungsbereich des Verteilelements 4 quer zur Transportrichtung T beschränken.

**Figur 3** zeigt eine Seitenansicht der erfindungsgemäßen Vorrichtung. Hier ist die Spitze 44 des Verteilelements 4 zu erkennen, die der Transportrichtung T der einlaufenden Artikel entgegengerichtet ist. Wie bereits erwähnt, ist das Verteilelement 4 aus dem ersten Führungsgeländer 41 und dem zweiten Führungsgeländer 42 gebildet. Über mehrere Verbindungselemente ist das Verteilelement 4 mit einer Plattform 6 verbunden. An der Plattform 6 greift ein Antriebsband 13 an, mit dem das Verteilelement 4 quer zur Transportrichtung T über der Transportebene TE verschoben werden kann. Der am Portal angebaute Motor 12 überträgt die Drehbewegung mittels einer Welle 17 auf das Antriebsband 13. Das Antriebsband 13 ist in vorteilhafter Weise als Zahnriemen ausgebildet. Es ist von Vorteil, wenn der Motor 12 als Servomotor ausgebildet ist. Ein Servomotor hat die Fähigkeit, dass er eine angefahrene Position erkennt und diese Position auch gezielt wieder anfahren kann.

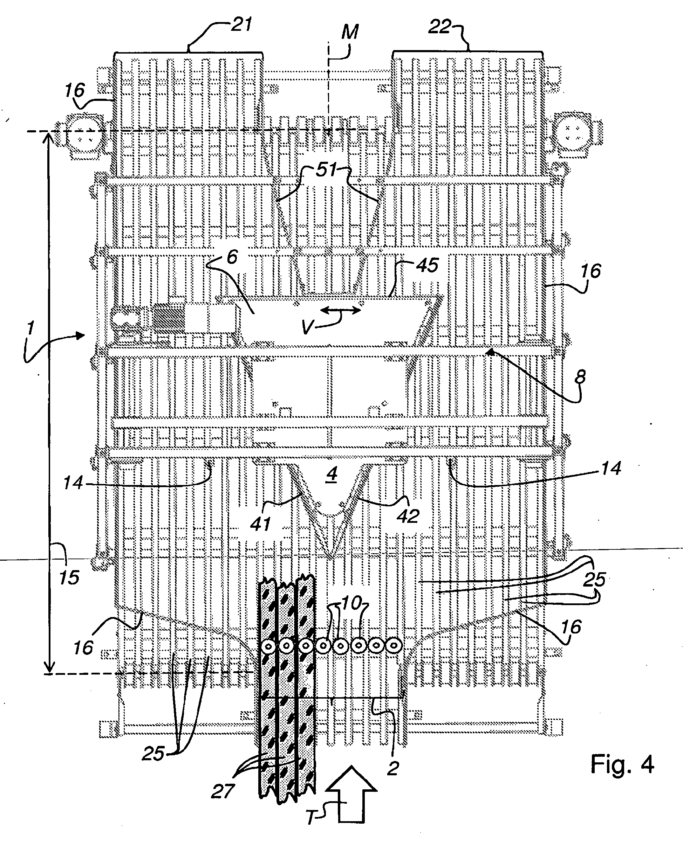

**Figur 4** zeigt eine Draufsicht auf die erfindungsgemäße Vorrichtung 1. Das einlaufende Transportband 2, welches eine Breite B besitzt, ist zwischen dem ersten auslaufenden Transportband 21, das die Breite B1 besitzt und einem zweiten auslaufenden Transportband 22, das die Breite B2 besitzt, angeordnet. Die Anordnung des einlaufenden Transportbandes 2 und des ersten auslaufenden Transportbandes 21 und des zweiten auslaufenden Transportbandes 22 ist derart gestaltet, dass ein Überlappbereich 15 der Transportbänder 2, 21 und 22 ausgebildet ist. Die Transportebene TE ist beidseitig durch ein Geländer 16 begrenzt. Die Geländer 16 dienen v. a. dazu, dass die transportierten Artikel 10 nicht von der Transportebene TE im Falle eines Staus oder einer Störung herunterfallen und somit beschädigt werden. In der in Figur 4 gezeigten Darstellung ist das Verteilelement 4 mittig in Bezug auf das einlaufende Transportband 2 angeordnet. Ferner ist der Bereich hinter dem Verteilelement 4 ebenfalls beidseitig durch ein Führungselement 51 begrenzt. Dieses Führungselement 51 dient ebenfalls dazu, dass keine Artikel im Falle eines Staus oder einer Störung in einen Bereich seitlich von den auslaufenden Transportbändern 21 und 22 gelangen. Das Portal 8, an dem das Führungselement 4 quer zur Transportrichtung T beweglich angeordnet ist, erstreckt sich über die gesamte Breite der Vorrichtung, die sich aus der Breite B1 des ersten Transportbandes 21, der Breite B des einlaufenden Transportbandes 2 und der Breite B2 des auslaufenden zweiten Transportbandes 22 zusammensetzt. Bei sämtlichen Darstellungen der erfindungsgemäßen Vorrichtung 1 sind die einzelnen Transportbänder weggelassen, aus denen sich das einlaufende Transportband 2, das erste auslaufende Transportband 21 und das zweite auslaufende Transportband 22 zusammensetzt. Die einzelnen Teiltransportbänder bilden somit Transportspuren, auf denen die Artikel durch die erfindungsgemäße Vorrichtung 1 transportiert werden. Die Teiltransportbänder, von denen sich ein Transportband zusammensetzt, liegen auf Tragelementen 25 auf. So ist das einlaufende Transportband 2 aus einer Vielzahl von Transportspuren 2₁, 2₂, ..., 2ₙ gebildet. Ebenso ist das erste auslaufende Transportband 21 aus einer Vielzahl von Transportspuren 21₁, 21₂, ..., 21ₙ gebildet. In gleicher Weise ist ebenfalls das zweite auslaufende Transportband 22 aus einer Vielzahl von Transportspuren 22₁, 22₂, ..., 22ₙ gebildet. Die Teiltransportbänder 27 des einlaufenden Transportbandes 2, wie in Figur 4 dargestellt, liegen dabei auf den Tragschienen 25 auf.

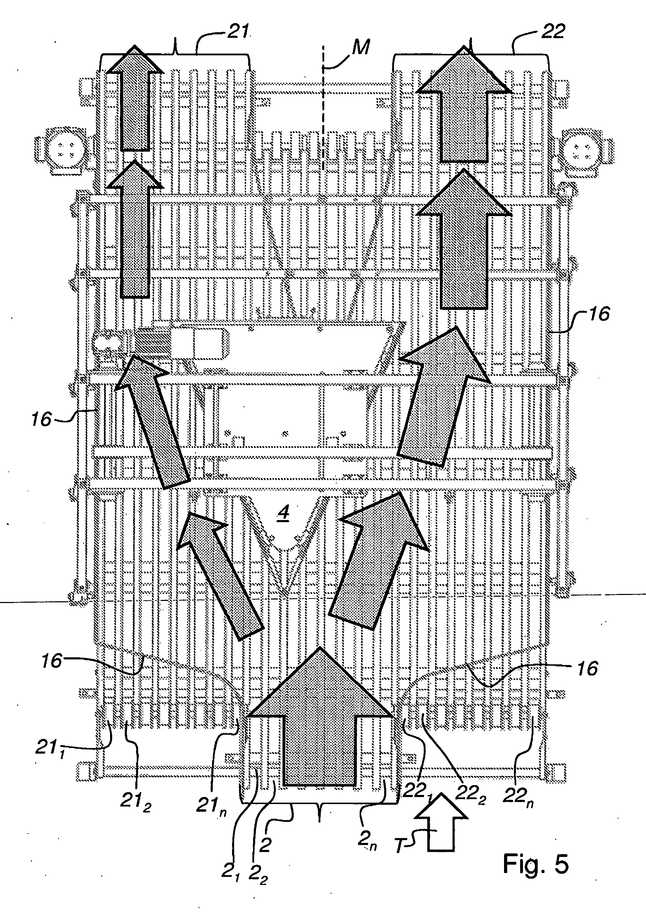

**Figur 5** zeigt eine Draufsicht auf die erfindungsgemäße Vorrichtung 1, bei der das Verteilelement 4 außerhalb der Mitte M des einlaufenden Transportbandes 2 angeordnet ist. Diese Anordnung wird dadurch bewirkt, dass das Verteilelement 4 mittels des Motors 12 über das Portal 8 quer zur Transportrichtung T entsprechend verschoben wird. Wie weit die Verschiebung des Verteilelements 4 durchgeführt wird, richtet sich letztendlich danach, wie die prozentuale Aufteilung des einlaufenden Artikelstroms auf dem einlaufenden Transportband 2 auf das erste auslaufende Transportband 21 und das zweite auslaufende Transportband 22 verteilt werden soll. Ist das Verteilelement 4 in der Mitte M des einlaufenden Transportbandes 2 angeordnet, erzielt man eine prozentuale Aufteilung von 50% der einlaufenden Artikel auf das erste auslaufende Transportband 21 und 50% der einlaufenden Artikel auf das zweite auslaufende Transportband 22. Bei der in Figur 5 gezeigten Darstellung wird durch die eingestellte Stellung des Verteilelements 4 ein geringerer prozentualer Anteil der einlaufenden Artikel auf das erste auslaufende Transportband 21 verteilt.

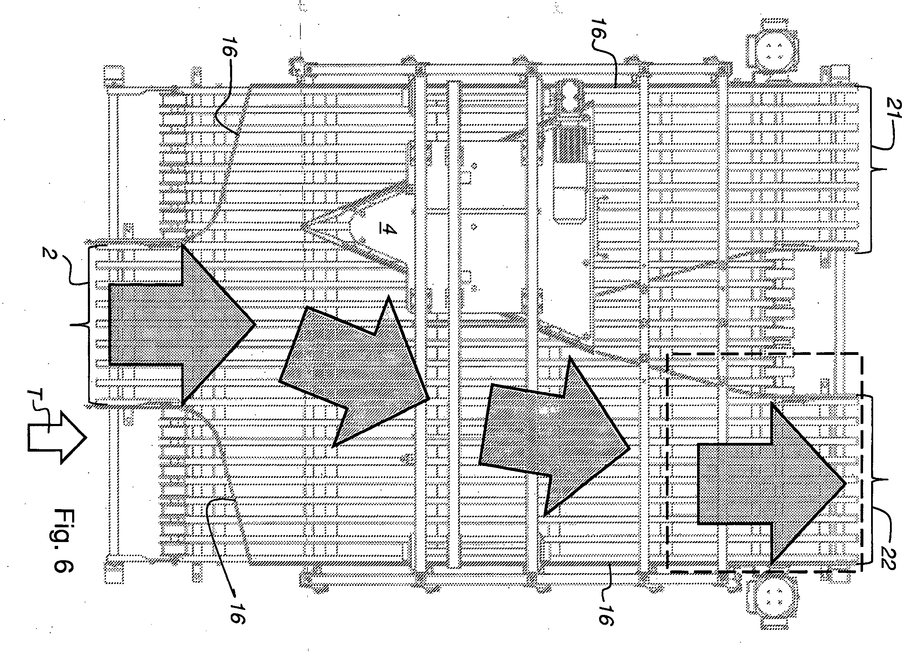

Bei der in **Figur 6** gezeigten Darstellung ist das Verteilelement 4 derart weit verfahren worden, dass die Spitze 44 des Verteilelements 4 über der Transportfläche des ersten auslaufenden Transportbandes 21 liegt. Vorzugsweise ist die Position der Spitze über dem Übergang von der Teiltransportspur 21ₙ und der Teiltransportspur 21_{n―1} des ersten auslaufenden Transportbandes 21 positioniert. Durch diese Stellung des Verteilelements 4 werden die auf dem einlaufenden Transportband 2 angelieferten Artikel vollständig auf das zweite auslaufende Transportband 22 umgeleitet.

Die prozentuale Umleitung des Artikelstroms vom einlaufenden Transportband 2 auf das erste auslaufende Transportband 21 und das zweite auslaufende Transportband 22 ist in den Figuren 4, 5 und 6 durch die Dicke der sich verzweigenden Pfeile P1 und P2 dargestellt. Ist, wie in Figur 4 gezeigt, die Bereite der verzweigenden Pfeile P1 und P2 gleich, bedeutet dies, dass 50% der einlaufenden Artikel 10 auf das erste auslaufende Transportband 21 und 50% der einlaufenden Artikel 10 auf das zweite auslaufende Transportband 22 durch das Verteilelement 4 geleitet werden.

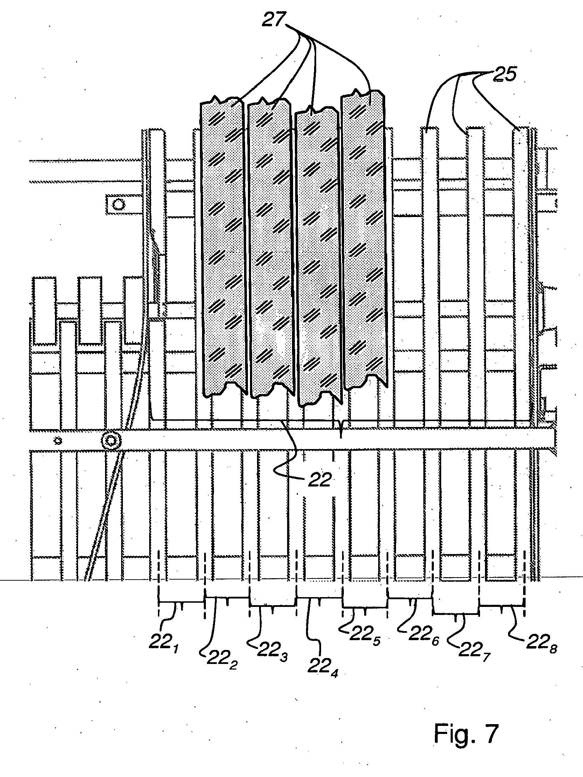

**Figur 7** zeigt eine vergrößerte Darstellung des aus Figur 6 mit dem gestrichelten Rechteck gekennzeichneten Bereichs. Das auslaufende zweite Transportband 22 ist aus acht Teiltransportspuren 22₁, 22₂, ..., 22₈ gebildet. Die Teiltransportbänder 27 liegen dabei auf den Tragschienen 25 für die Teiltransportbänder 27 auf.

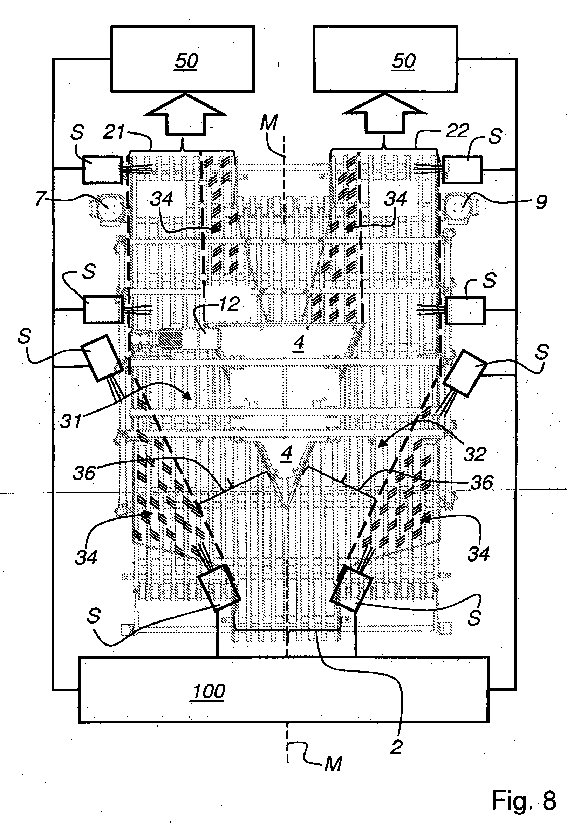

**Figur 8** zeigt eine schematische Draufsicht auf die erfindungsgemäße Vorrichtung 1, bei der eine Vielzahl von Sensoren S angeordnet sind, um den Transportzustand, bzw. die Transportsituation der Artikel 10 auf der durch das einlaufende Transportband 2, das erste auslaufende Transportband 21 und das zweite auslaufende Transportband 22 gebildeten Transportebene TE zu überprüfen. Es ist eine Maschinensteuerung 100 vorgesehen, an die die von den Sensoren S ermittelten Signale übermittelt werden. Dem auslaufenden ersten Transportband 21 und dem auslaufenden zweiten Transportband 22 ist jeweils eine Verarbeitungseinheit 50 nachgeordnet. In der jeweiligen Verarbeitungseinheit 50 können die mit den Transportbändern 21 und 22 zugeführten Artikel z. B. verpackt werden. Von den jeweiligen Verpackungseinheiten 50 werden ebenfalls Signale an die Maschinensteuerung 100 übermittelt, die in Zusammenhang mit den von den Sensoren S gelieferten Signalen in entsprechender Weise verarbeitet werden, um letztendlich das einlaufende Transportband 2 und das erste auslaufende Transportband 21 und das zweite auslaufende Transportband 22 derart zu steuern, dass ein reibungsloser Transport und eine reibungslose Verteilung der Artikel 10 auf die beiden auslaufenden Transportbänder 21, 22 möglich ist. Der Motor 7 und der Motor 9, die für den Antrieb des einlaufenden Transportbandes 2 an der Vorrichtung angebracht sind, sind ebenfalls mit der Maschinensteuerung 100 verbunden. Parallel dazu ist ebenfalls der Motor 12, mit dem das Verteilelement 4 quer zur Transportrichtung T über der Transportebene TE verstellt werden kann, mit der Maschinensteuerung 100 verbunden. Je nach Bedarf und Anforderung der Verteilung der Artikel 10 vom einlaufenden Transportband 2 auf das erste auslaufende Transportband 21 und das zweite auslaufende Transportband 22, kann die Maschinensteuerung 100 entsprechend reagieren und auf die verschiedenen Stellglieder (Motore 7, 9 und 12) einwirken, damit ein reibungsloser und automatischer Betrieb der Vorrichtung 1 gewährleistet ist. Gemäß einer möglichen Ausführungsform kann das einlaufende Transportband 2 mit dem ersten Motor 7 bis zur Mitte M hin mit einer anderen Geschwindigkeit betrieben werden, als die andere Hälfte des einlaufenden Transportbandes 2, welches über den Motor 9 angetrieben werden kann.

Wie bereits erwähnt, können in Abhängigkeit von der Stellung des Verteilelements 4 die mit dem einlaufenden Transportband 2 angelieferten Artikel in einen ersten Transportbereich 31 auf dem ersten auslaufenden Transportband 21 und in einem zweiten Transportbereich 32 des auslaufenden zweiten Transportbandes 22 überführt werden. Da das Verteilelement 4 mit ihrer Spitze in der Mitte M des einlaufenden Transportbandes 22 angeordnet ist, ist die Breite 36 des ersten Transportbereichs 31 und des zweiten Transportbereichs 32 gleich groß. Es liegt also hiermit eine 50:50 Aufteilung der auf dem ersten Transportband 2 einlaufenden Artikel 10 auf das erste auslaufende Transportband 21 und auf das zweite auslaufende Transportband 22 vor.

Im Überlappbereich 15 des einlaufenden Transportbandes 2 und der beiden auslaufenden Transportbänder 21 und 22 bilden sich im Wesentlichen neben dem Verteilelement 4 in Transportrichtung T hinter dem Verteilelement 4 artikelfreie Bereiche 34 aus. Mit den Sensoren S ist es somit möglich, diese artikelfreien Bereiche 34 zu überwachen. Sollten sich Artikel in den artikelfreien Bereichen 34 befinden, deutet dies auf eine Störung der nach geschalteten Verarbeitungseinheit 50 oder auf eine Störung innerhalb der auslaufenden Transportbänder 21 und 22 hin. Werden mittels der Sensoren S Artikel 10 in den artikelfreien Bereichen registriert, wird somit ein Signal an die Maschinensteuerung 100 gesendet, damit in geeigneter Weise auf den Artikeltransport innerhalb der Vorrichtung 1 eingegriffen werden kann. Ein möglicher Eingriff ist, dass das Verteilelement 4 in geeigneter Weise derart verfahren wird, dass die von der Maschinensteuerung 100 registrierte Störung beseitigt wird Ebenso kann die Zuführgeschwindigkeit der Artikel auf dem einlaufenden Transportband 2 über den Motor 7 und/oder den Motor 9 in geeigneter Weise reduziert werden. Ein vollkommener Stillstand des einlaufenden Transportbandes 2 ist ebenfalls denkbar.

Auch können die Sensoren S als Freiraumüberwachung genutzt werden, damit das Verteilelement 4 nur dann in die gewünschte Richtung bewegt wird, wenn die Sensoren S keine Artikel 10 detektieren und somit eine ungehinderte Positio― nierung möglich ist.

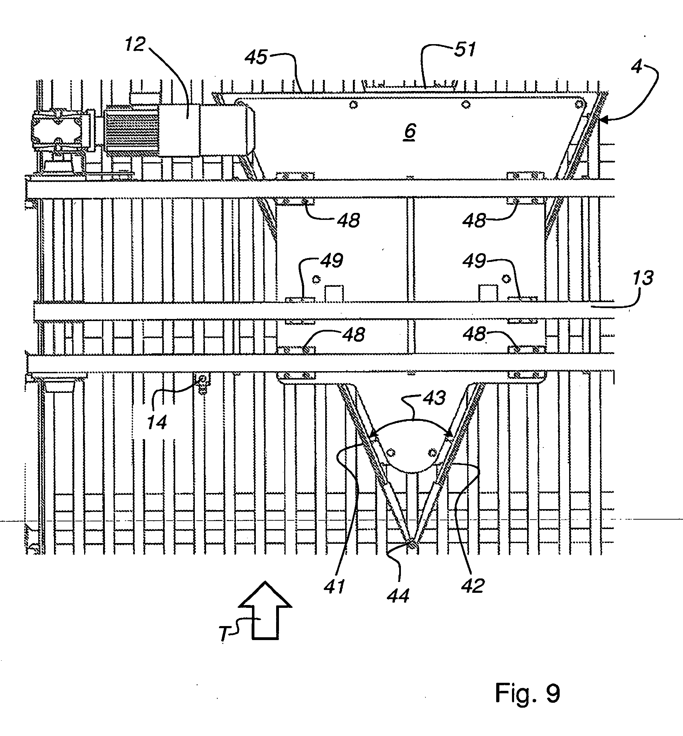

**Figur 9** zeigt eine detaillierte Draufsicht auf das Verteilelement 4, welches quer zur Transportrichtung T über der Transportebene TE verschoben werden kann, um dadurch die einlaufenden Artikel 10 in geeigneter Weise auf das erste auslaufende Transportband 21, bzw. auf das zweite auslaufende Transportband 22 umzulenken. Wie bereits erwähnt, ist das Verteilelement 4 aus einem ersten Führungselement 41 und einem zweiten Führungselement 42 aufgebaut. Das erste Führungselement 41 und das zweite Führungselement 42 sind unter einem spitzen Winkel 43 zueinander angeordnet und bilden somit eine Spitze 44 aus. Diese Spitze 44 ist der Transportrichtung T der Artikel entgegengerichtet. An der der Spitze 44 abgewandten Seite des Verteilelements 4 ist eine Basis 45 vorgesehen, die das erste Führungselement 41 und das zweite Führungselement 42 miteinander verbindet. Das Verteilelement 4 ist an einer Plattform 6 befestigt. Die Plattform 6 weist mehrere Linearführungen 48 auf, die mit entsprechenden Elementen des Portals 8 zusammenwirken. Mittels der Linearführungen 48 ist es somit möglich, das Verteilelement 4 in geradliniger Weise quer zur Transportrichtung T zu verfahren. Die Bewegung des Verteilelements 4 wird durch einen Motor 12 bewirkt, der auf ein Antriebsband 13 wirkt, das mit der Plattform 6 über zwei Anlenkungen 49 verbunden ist. Somit kann die Drehbewegung des Motors 12 in eine lineare Bewegung des Verteilelements 4 umgesetzt werden. In einer besonders bevorzugten Ausführungsform ist der Motor 12 als Servomotor ausgebildet. Die Basis 45 des Verteilelements 4 stützt sich an einem Führungselement 51 ab. Durch diese Abstützung kann man den Druck der einlaufenden Artikel auf das Verteilelement 4 abfangen und verhindert somit eine mögliche Verkantung des Verteilelements 4 bei der Bewegung entlang der Linearführungen 48.

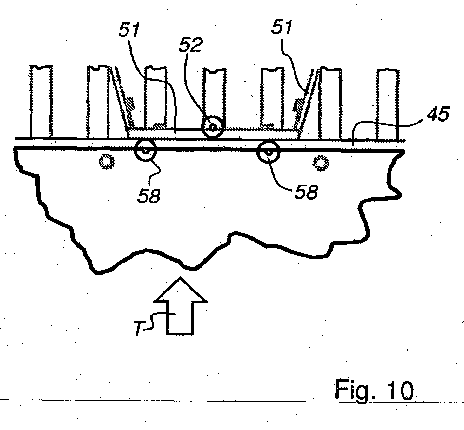

**Figur 10** zeigt eine vergrößerte Darstellung des Bereichs der Basis 45 und des Führungselements 51, in dem das Verteilelement 4 sich an dem Führungselement abstützt. Das Führungselement 51 besitzt an der der Basis 45 zugewandten Seite eine oder mehrere Rollen 52. Ebenso kann die Basis 45 mindestens eine Rolle 58 besitzen, die mit dem Führungselement 51 zusammenwirkt. Durch dieses Zusammenwirken der verschiedenen Rollen 52 und 58 erreicht man eine reibungsreduzierende Unterstützung des Verteilelements 4 bei dessen linearen Bewegung quer zur Transportrichtung T. Ebenso können an Stelle der Rollen 52, 58 Gleitelemente oder Linearführungen (nicht gezeigt) verwendet werden, welche ein Verfahren reibungsreduziert erlauben und dennoch die abstützende Wirkung beibehalten.

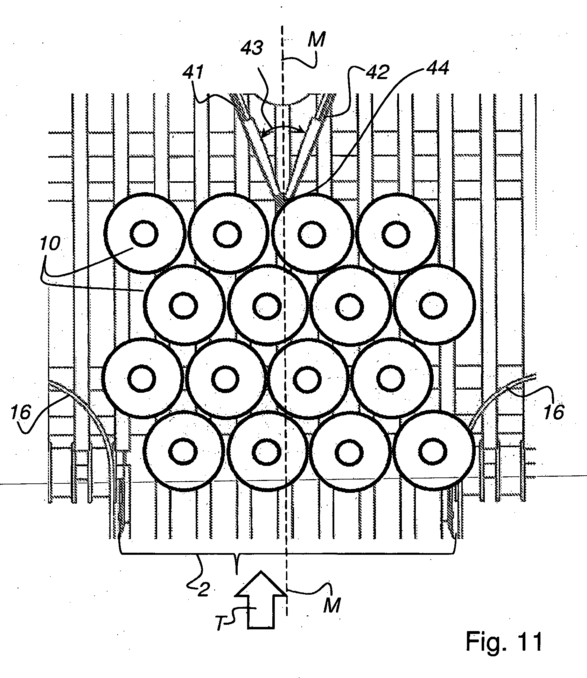

**Figur 11** zeigt die Anlieferung einer Vielzahl von Artikeln 10 auf dem einlaufenden Transportband 2. Die Artikel 10 treffen dabei in Transportrichtung T auf die Spitze 44 des Verteilelements 4. Wie bereits mehrfach erwähnt, ist die Spitze 44 durch das erste Führungselement 41 und das zweite Führungselement 42 gebildet, die in einem spitzen Winkel 43 zueinander angeordnet sind. Die auf dem einlaufenden Transportband 2 in Transportrichtung T angelieferten Artikel 10 werden ebenfalls noch teilweise mit den Geländern 16 beidseitig geführt. Das Verteilelement 4 ist dabei derart in Bezug auf die mit dem einlaufenden Transportband 2 angelieferten Artikel 10 angeordnet, dass die Spitze 44 des Verteilelements 4 die Artikel im Wesentlichen zwischen zwei Artikeln 10 berührt und somit sanft auf die erste auslaufende Transportspur 21, bzw. auf die zweite auslaufende Transportspur 22 verteilt.

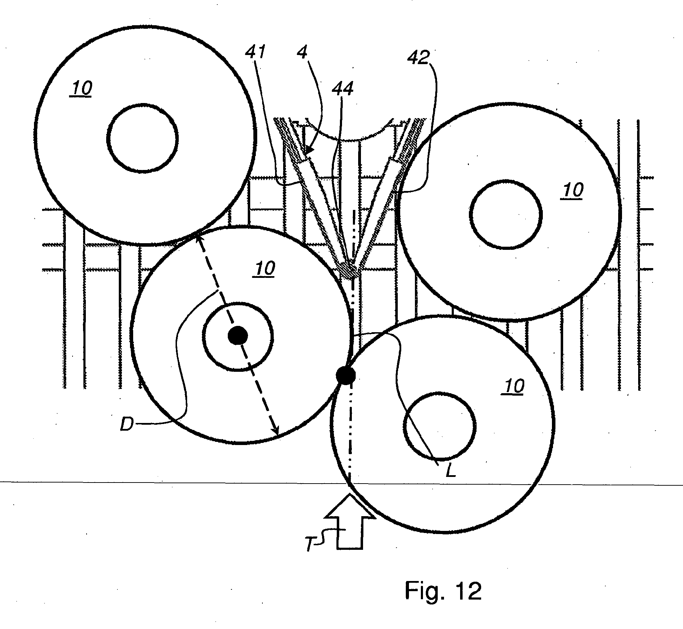

**Figur 12** zeigt eine vergrößerte Darstellung der Wirkung des Verteilelements 4 beim Aufteilen des Artikelstroms auf die erste auslaufende Transportspur 21 und auf die zweite auslaufende Transportspur 22. Das Verteilelement 4 soll immer derart in Bezug auf die einlaufenden Artikel 10 angeordnet sein, dass die durch das Verteilelement 4 und das erste Führungsgeländer 41 und das zweite Führungsgeländer 42 gebildete Spitze derart angeordnet ist, dass die Spitze im Wesentlichen auf eine Linie L gerichtet wird, an der sich zwei benachbarte Artikel 10 mit ihrem Standkreisdurchmesser D berühren. Würden z. B. die angelieferten Artikel 10 direkt auf die Spitze 44 treffen, würden den Artikeln keine Bewegungskomponenten quer zur Transportrichtung T durch das Verteilelement 4 verliehen. Somit besteht immer die Gefahr, dass sich ein Stau bildet, oder dass die Verteilung der einlaufenden Artikel 10 auf das erste auslaufende Transportband 21 und das zweite auslaufende Transportband 22 nicht in der gewünschten reibungslosen Art und Weise abläuft. Somit ist es immer eine Bedingung, das Verteilelement 4 derart in Bezug auf den einlaufenden Artikelstrom auszurichten, bzw. anzuordnen, dass die Artikel 10, welche mit dem Verteilelement 4 auf die auslaufenden Transportspuren 21 und 22 verteilt werden, immer eine Bewegungskomponente quer zur Transportrichtung T erhalten.

Das Verstellen des Verteilelements 4 quer zur Transportrichtung T trägt somit auch einer möglichen unterschiedlichen Leistung der dem ersten auslaufenden Transportband 21 und dem zweiten auslaufenden Transportband 22 nachgeschalteten Verarbeitungsmaschine 50 Rechnung. Durch das Verteilelement 4 kann somit der Artikelstrom gezielt und leistungsgerecht auf die Verarbeitungsmaschinen 50 verteilt werden.

Die Erfindung wurde unter Bezugnahme auf eine bevorzugte Ausführungsform beschrieben. Es ist jedoch für einen Fachmann selbstverständlich, dass Abwandlungen oder Änderungen der Erfindung gemacht werden können, ohne dabei den Schutzbereich der nachstehenden Ansprüche zu verlassen.

## Patentansprüche

1. Vorrichtung (1) zum Verteilen von Artikeln (10) innerhalb eines Artikelstroms in einer Transportrichtung (T), wobei die Vorrichtung (1) ein einlaufendes Transportband (2), ein erstes auslaufendes Transportband (21) und ein zweites auslaufendes Transportband (22) umfasst, wobei das einlaufende Transportband (2) und das erste und zweite auslaufende Transportband (21, 22) derart in Transportrichtung (T) zueinander angeordnet sind, dass ein Überlappungsbereich (15) ausgebildet ist, **dadurch gekennzeichnet, dass** das einlaufende Transportband (2) mehrere Transportspuren (2₁, 2₂,..., 2ₙ) und das erste und zweite auslaufende Transportband (21, 22) jeweils mehrere Transportspuren (21₁, 21₂,..., 21ₙ; 22₁, 22₂,..., 22ₙ) aufweisen und wobei ein im Wesentlichen quer zur Transportrichtung (T) verschiebliches Verteilelement (4) ausgebildet ist, das aus einem ersten Führungsgeländer (41) und einem zweiten Führungsgeländer (42) besteht, die beide unter einem spitzen Winkel (43) miteinander verbunden sind und somit eine Spitze (44) ausbilden, die der Transportrichtung (T) entgegengerichtet ist, so dass der in Transportrichtung (T) ankommende Artikelstrom auf das erste auslaufende Transportband (21) und/oder das zweite auslaufende Transportband (22) verteilbar ist.

2. Vorrichtung (1) nach Anspruch 1, wobei das erste Führungsgeländer (41) und das zweite Führungsgeländer (42) über eine Basis (45) miteinander verbunden sind, die an einem in Transportrichtung (T) nachgeschalteten Führungselement (51) in Transportrichtung (T) abgestützt und quer zur Transportrichtung (T) reibungsreduzierend unterstützt ist.

3. Vorrichtung (1) nach Anspruch 2, wobei die Basis (45) und das Führungselement (51) über jeweils mehrere Rollen (52, 58) oder Gleitelemente quer zur Transportrichtung (T) reibungsreduzierend unterstützt sind.

4. Vorrichtung (1) nach einem der Ansprüche 1 bis 3, wobei das Verteilelement (4) mit einer Plattform (6) verbunden ist, die an einem Portal (8), das sich quer über der Überlappungsbereich (15) des einlaufenden Transportbandes (2) und des ersten und zweiten auslaufenden Transportbandes (21, 22) erstreckt, angeordnet ist.

5. Vorrichtung (1) nach Anspruch 4, wobei dem Portal (8) ein individuell ansteuerbarer Motor (12) zugeordnet ist, der auf ein Antriebsband (13) wirkt, das an der am Portal (8) linear geführten Plattform (6) angelenkt ist.

6. Vorrichtung (1) nach Anspruch 5, wobei am Portal (8) zwei Endschalter (14) angebracht sind, über die ein Verfahrbereich des Verteilelements (4) quer zur Transportrichtung (T) beschränkt ist.

7. Vorrichtung (1) nach einem der Ansprüche 1 bis 6, wobei eine Summe (BS) aus einer ersten Breite (B₁) des ersten auslaufenden Transportbandes (21) und einer zweiten Breite (B₂) des zweiten auslaufenden Transportbandes (22) größer ist, als eine Breite (B) des einlaufenden Transportbandes (2).

8. Vorrichtung (1) nach Anspruch 7, wobei die Breite (B1) des ersten auslaufenden Transportbandes (21) und die Breite (B2) des zweiten auslaufenden Transportbandes (22) und die Breite (B) des einlaufenden Transportbandes (2) jeweils gleich sind.

9. Vorrichtung (1) nach einem der Ansprüche 1 bis 8, wobei eine Maschinensteuerung (100) vorgesehen ist, die in Abhängigkeit von den mit der Vorrichtung (1) zu verarbeitenden Artikeln (10) und der prozentualen Verteilung der Artikel (10) auf das erste und zweite auslaufende Transportband (21, 22) das Verteilelement (4) derart quer zur Transportrichtung (T) verschiebt, dass die durch das erste und zweite Führungsgeländer (41, 42) gebildete Spitze (44) im Wesentlichen auf eine Linie (L) gerichtet ist, an der sich zwei Artikel (10) mit ihrem jeweiligen Standkreisdurchmesser (D) berühren.

10. Verfahren zum Verteilen von Artikeln (10) innerhalb eines Artikelstroms, wobei die Artikel (10) in Transportrichtung (T) über ein einlaufendes Transportband (2) angeliefert werden und wobei die Artikel auf ein erstes auslaufendes Transportband (21) und ein zweites auslaufendes Transportband (22) verteilt werden, **dadurch gekennzeichnet, dass** ein Verteilelement (4) quer zur Transportrichtung (T) der Artikel (10) verfahren wird, dass die Artikel (10) gemäß einem vordefinierten prozentualen Verhältnis auf das erste und zweite auslaufende Transportband (21, 22) verteilt werden, wobei das Verteilelement (4) aus einem ersten Führungsgeländer (41) und einem zweiten Führungsgeländer (42) be steht, die beide unter einem spitzen Winkel (43) miteinander verbunden sind und somit eine Spitze (44) ausbilden, die der Transportrichtung (T) der Artikel entgegengerichtet ist, wobei das Verteilelement (4) derart (T) in Bezug auf die ankommenden Artikel (10) verfahren wird, dass die Spitze (44) im Wesentlichen auf eine Linie (L) gerichtet wird, an der sich zwei benachbarte Artikel mit ihrem Standkreisdurchmesser (D) berühren.

11. Verfahren nach Anspruch 10, wobei mittels des Verteilelements (4) die vom einlaufenden Transportband (2) transportierten Artikel (10) in einen ersten Transportbereich (31) des ersten auslaufenden Transportbandes (21) und in einen zweiten Transportbereich (32) des zweiten Transportbandes (22) überführt werden.

12. Verfahren nach Anspruch 11, wobei in Abhängigkeit von der Stellung des Verteilelements (4) in einem Überlappungsbereich (15) des einlaufenden Transportbandes (2) und der beiden auslaufenden Transportbänder (21, 22) im Wesentlichen neben dem Verteilelement (4) und in Transportrichtung (T) hinter dem Verteilelement (4) artikelfreie Bereiche (34) ausgebildet werden.

13. Verfahren nach den Ansprüchen 10 bis 12, wobei an eine Maschinensteuerung (100) von einer erster Verarbeitungseinheit (50), die dem ersten auslaufenden Transportband (21) nachgeschaltet ist und von einer zweiten Verarbeitungseinheit (50), die dem zweiten auslaufenden Transportband (22) nachgeschaltet ist, Signale übermittelt werden, und dass von mehreren Sensoren (S) das einlaufende Transportband (2), das erste auslaufende Transportband (21) und das zweite auslaufende Transportband (22) hinsichtlich der Transportsituation der Artikel (10) überwacht und entsprechende Signale an die Maschinensteuerung, (100) gesendet werden.

14. Verfahren nach Anspruch 13, wobei von den mehreren Sensoren (S) die artikelfreien Bereiche (34) dahingehend überwacht werden, ob sich in den Bereichen (34) Artikel befinden und dass, falls Artikel (10) in den artikelfreien Bereichen (34) festgestellt werden, ein Warnsignal gesetzt wird oder die Maschinensteuerung (100) derart in die Vorrichtung (1) eingreift, dass das Warnsignal durch eine geeignete Verstellung des Verteilelements (4) und/oder einer Geschwindigkeitssteuerung des einlaufenden Transportbandes (2) und/oder der beiden auslaufenden Transportbänder (21, 22) aufgehoben werden kann.

## Claims

1. An apparatus (1) for distributing articles (10) within a flow of articles in a transport apparatus (T), wherein the apparatus (1) comprises an incoming conveyor belt (2), a first outgoing conveyor belt (21) and a second outgoing conveyor belt (22), wherein the incoming conveyor belt (2) and the first and second outgoing conveyor belt (21, 22) are arranged with respect to each other in the transport direction (T) in such a way that an overlapping region (15) is formed, **characterized in that** the incoming conveyor belt (2) comprises several transport tracks (2₁, 2₂, ..., 2ₙ), and the first and second outgoing conveyor belt (21, 22) respectively comprise several transport tracks (21₁, 21₂, ..., 21ₙ; 22₁, 22₂, ..., 22ₙ), and wherein a movable distribution element (4) is formed substantially transversely to the transport direction (T), which distribution element (4) consists of a first guide railing (41) and a second guide railing (42), which are both connected to each other under an acute angle (43), and thus form a tip (44) which is directed against the transport direction (T), so that the flow of articles arriving in the transport direction (T) can be distributed to the first outgoing transport belt (21) and/or the second outgoing transport belt (22).

2. The apparatus (1) according to claim 1, wherein the first guide railing (41) and the second guide railing (42) are connected to each other via a base (45) which rests in the transport direction (T) on a guide element (51) situated downstream in the transport direction (T) and is supported in a friction-reducing manner transversely to the transport direction (T).

3. The apparatus (1) according to claim 2, wherein the base (45) and the guide element (51) are supported in a friction-reducing manner transversely to the transport direction (T) via several respective rollers (52, 58) or sliding elements.

4. The apparatus (1) according to one of the claims 1 to 3, wherein the distribution element (4) is connected to a platform (6) which is arranged on a portal (8) that extends transversely over the overlapping region (15) of the incoming transport belt (2) and the first and second outgoing transport belt (21, 22).

5. The apparatus (1) according to claim 4, wherein a motor (12) that can be triggered individually is associated with the portal (8), which motor acts on a drive belt (13) which is hinged to the platform (6) that is linearly guided on the portal (8).

6. The apparatus (1) according to claim 5, wherein two limit switches (14) are arranged on the portal (8), via which a travel range of the distribution element (4) transversely to the transport direction (T) is limited.

7. The apparatus (1) according to one of the claims 1 to 6, wherein a sum total (BS) of a first width (B₁) of the first outgoing transport belt (21) and a second width (B₂) of the second outgoing transport belt (22) is greater than a width (B) of the incoming transport belt (2).

8. The apparatus (1) according to claim 7, wherein the width (B1) of the first outgoing transport belt (21) and the width (B2) of the second outgoing transport belt (22) and the width (B) of the incoming transport belt (2) are respectively the same.

9. The apparatus (1) according to one of the claims 1 to 8, wherein a machine control unit (100) is provided which displaces the distribution element (4) transversely to the transport direction (T) depending on the articles (10) to be processed by the apparatus (1) and the percentage distribution of the articles (10) to the first and second outgoing transport belt (21, 22) in such a manner that the tip (44) formed by the first and second guide railing (41, 42) is substantially directed towards a line (L) on which two articles (10) touch each other with their respective pitch circle diameter (D).

10. A method for distributing articles (10) within a flow of articles, wherein the articles (10) are supplied in a transport direction (T) via an incoming transport belt (2), and wherein the articles are distributed to a first outgoing transport belt (21) and a second outgoing transport belt (22), **characterized in that** a distribution element (4) is displaced transversely to the transport direction (T) of the articles (10), the articles (10) are distributed according to a predefined percentage ratio to the first and second outgoing transport belt (21, 22), wherein the distribution element (4) consists of a first guide railing (41) and a second guide railing (42), which are both connected to each other under an acute angle (43), and thus form a tip (44) which is directed against the transport direction (T) of the articles, wherein the distribution element (4) is displaced in such a way (T) with respect to the incoming articles (10) that the tip (44) is directed substantially to a line (L) on which two adjacent articles touch each other with their pitch circle diameter (D).

11. The method according to claim 10, wherein the articles (10) transported by the incoming transport belt (2) are transferred by means of the distribution element (4) into a first transport region (31) of the first outgoing transport belt (21) and into a second transport region (32) of the second transport belt (22).

12. The method according to claim 11, wherein article-free regions (34) are formed substantially adjacent to the distribution element (4) and in the transport direction (T) behind the distribution element (4) depending on the position of the distribution element (4) in an overlapping region (15) of the incoming transport belt (2) and the two outgoing transport belts (21, 22).

13. The method according to claims 10 to 12, wherein signals are transmitted to a machine control unit (100) from a first processing unit (50) which is situated downstream of the first outgoing transport belt (21) and from a second processing unit (50) which is situated downstream of the second outgoing transport belt (22), and the incoming transport belt (2), the first outgoing transport belt (21) and the second outgoing transport belt (22) are monitored by several sensors (S) with respect to the transport situation of the articles (10), and respective signals are sent to the machine control unit (100).

14. The method according to claim 13, wherein the article-free regions (34) are monitored by the several sensors (S) in the respect as to whether articles are situated in the regions (34), and, if articles (10) are determined in the article-free regions (34), a warning signal is emitted or the machine control unit (100) intervenes in the apparatus (1) in such a manner that the warning signal can be cancelled by a suitable adjustment of the distribution element (4) and/or a speed control of the incoming transport belt (2) and/or the two outgoing transport belts (21, 22).

## Revendications

1. Dispositif (1) pour répartir des articles (10) au sein d'un flux d'articles dans un sens de transport (T), lequel dispositif (1) comprend une bande transporteuse entrante (2), une première bande transporteuse sortante (21) et une deuxième bande transporteuse sortante (22), la bande transporteuse entrante (2) et les première et deuxième bandes transporteuses sortantes (21, 22) étant disposées les unes par rapport aux autres dans le sens de transport (T) de manière à former une zone de chevauchement (15), **caractérisé en ce que** la bande transporteuse entrante (2) comporte plusieurs pistes de transport (2₁, 2₂, ..., 2ₙ) et les première et deuxième bandes transporteuses sortantes (21, 22) comportent chacune plusieurs pistes de transport (21₁, 21₂, ..., 21ₙ; 22₁, 22₂, ..., 22ₙ) et dans lequel un élément répartiteur (4) déplaçable de façon sensiblement transversale par rapport au sens de transport (T) est formé, lequel se compose d'une première rampe de guidage (41) et d'une deuxième rampe de guidage (42) qui sont reliées toutes les deux en formant un angle aigu (43) entre elles et forment ainsi une pointe (44) orientée à l'opposé du sens de transport (T), de telle manière que le flux d'articles arrivant dans le sens de transport (T) puisse être réparti sur la première bande transporteuse sortante (21) et/ou deuxième bande transporteuse sortante (22).

2. Dispositif (1) selon la revendication 1, dans lequel la première rampe de guidage (41) et la deuxième rampe de guidage (42) sont reliées l'une à l'autre par l'intermédiaire d'une base (45) qui s'appuie dans le sens de transport (T) sur un élément de guidage (51) monté en aval dans le sens de transport (T) et qui est supportée transversalement par rapport au sens de transport (T) de façon à réduire le frottement.

3. Dispositif (1) selon la revendication 2, dans lequel la base (45) et l'élément de guidage (51) sont supportés chacun par plusieurs galets (52, 58) ou éléments de glissement perpendiculairement au sens de transport (T) de façon à réduire le frottement.

4. Dispositif (1) selon l'une des revendications 1 à 3, dans lequel l'élément répartiteur (4) est relié à une plate-forme (6) disposée sur un portique (8) qui s'étend transversalement par-dessus la zone de chevauchement (15) de la bande transporteuse entrante (2) et des première et deuxième bandes transporteuses sortantes (21, 22).

5. Dispositif (1) selon la revendication 4, dans lequel le portique (8) est associé à un moteur (12) pouvant être actionné individuellement, qui agit sur une bande d'entraînement (13) articulée sur la plate-forme (6) guidée de façon linéaire sur le portique (8).

6. Dispositif (1) selon la revendication 5, dans lequel sont disposés sur le portique (8) deux interrupteurs de fin de course (14) qui limitent une zone de déplacement de l'élément répartiteur (4) dans le sens transversal par rapport au sens de transport (T).

7. Dispositif (1) selon l'une des revendications 1 à 6, dans lequel une somme (BS) d'une première largeur (B₁) de la première bande transporteuse sortante (21) et d'une deuxième largeur (B₂) de la deuxième bande transporteuse sortante (22) est plus grande qu'une largeur (B) de la bande transporteuse entrante (2).

8. Dispositif (1) selon la revendication 7, dans lequel la largeur (B₁) de la première bande transporteuse sortante (21) et la largeur (B₂) de la deuxième bande transporteuse sortante (22) et la largeur (B) de la bande transporteuse entrante (2) sont égales.

9. Dispositif (1) selon l'une des revendications 1 à 8, dans lequel est prévue une commande de machine (100) qui déplace l'élément répartiteur (4) transversalement par rapport au sens de transport (T), en fonction des articles (10) à traiter avec le dispositif (1) et de la répartition en pourcentage des articles (10) sur les première et deuxième bandes transporteuses sortantes (21, 22), de telle manière que la pointe (44) formée par les première et deuxième rampes de guidage (41, 42) soit pour l'essentiel orientée sur une ligne (L) sur laquelle deux articles (10) se touchent sur leur diamètre de cercle d'appui (D).

10. Procédé pour répartir des articles (10) au sein d'un flux d'articles, dans lequel les articles (10) sont délivrés dans un sens de transport (T) sur une bande transporteuse entrante (2) et dans lequel les articles sont répartis sur une première bande transporteuse sortante (21) et une deuxième bande transporteuse sortante (22), **caractérisé en ce qu'**un élément répartiteur (4) est déplacé dans le sens transversal par rapport au sens de transport (T) des articles (10), **en ce que** les articles (10) sont répartis selon une proportion en pourcentage prédéfinie sur les première et deuxième bandes transporteuses sortantes (21, 22), l'élément répartiteur (4) se composant d'une première rampe de guidage (41) et d'une deuxième rampe de guidage (42) qui sont reliées toutes les deux en formant un angle aigu (43) entre elles et forment ainsi une pointe (44) orientée à l'opposé du sens de transport (T) des articles, l'élément répartiteur (4) étant déplacé de telle manière (T) par rapport aux articles (10) qui arrivent que la pointe (44) soit dirigée sensiblement vers une ligne (L) sur laquelle deux articles se touchent sur leur diamètre de cercle d'appui (D).

11. Procédé selon la revendication 10, dans lequel l'élément répartiteur (4) fait passer les articles (10) transportés par la bande transporteuse entrante (2) dans une première zone de transport (31) de la première bande transporteuse sortante (21) et dans une deuxième zone de transport (32) de la deuxième bande transporteuse sortante (22).

12. Procédé selon la revendication 11, dans lequel, en fonction de la position de l'élément répartiteur (4) dans une zone de chevauchement (15) de la bande transporteuse entrante (2) et des deux bandes transporteuses sortantes (21, 22), des zones sans articles (34) sont formées sensiblement à côté de l'élément répartiteur (4) et en arrière de l'élément répartiteur (4) dans le sens de transport (T).

13. Procédé selon les revendications 10 à 12, dans lequel des signaux sont transmis à une commande de machine (100) par une première unité de traitement (50) montée en aval de la première bande transporteuse sortante (21) et par une deuxième unité de traitement (50) montée en aval de la deuxième bande transporteuse sortante (22) et en ce que plusieurs capteurs (S) surveillent la bande transporteuse entrante (2), la première bande transporteuse sortante (21) et la deuxième bande transporteuse sortante (22) en ce qui concerne la situation de transport des articles (10) et envoient des signaux correspondants à la commande de machine (100).

14. Procédé selon la revendication 13, dans lequel les plusieurs capteurs (S) surveillent les zones sans articles (34) pour déterminer si des articles se trouvent dans ces zones (34) et en ce que, si des articles (10) sont trouvés dans les zones sans articles (34), un signal d'avertissement est émis ou la commande de machine (100) intervient dans le dispositif (1) de telle façon que le signal d'avertissement puisse être annulé par un déplacement approprié de l'élément répartiteur (4) et/ou une commande de la vitesse de la bande de transport entrante (2) et/ou des deux bandes de transport sortantes (21, 22).
